# EUROPEAN PATENT SPECIFICATION

(11) **EP 2 674 829 B1**
(45) Date of publication and mention of the grant of the patent: **13.06.2018**
(21) Application number: 12194483.9
(22) Date of filing: 27.11.2012
(51) Int. Cl.: G05G 1/06, G05G 1/58, B64C 13/04, G05G 9/047

(54) **Sidestick controller grip**
Sidestick-Steuergriff
Manette latérale

(30) Priority: 28.11.2011 US 201113305721
(43) Date of publication of application: 18.12.2013
(73) Proprietor: Embraer, S.A., São José dos Campos, 12227-901- SP (BR)
(72) Inventor: Rey, Hans Jorg, 12227-901 São José Dos Campos - SP (BR); Castro Paiva, Luiz Fernando Silva de, 12227-901 São José Dos Campos - SP (BR); Gueiros, Celso Aparecido Cruz, 12227-901 São José Dos Campos - SP (BR); Cerqueira Lario, Rogério de, 12227-901 São José Dos Campos - SP (BR); Castanha, Bruno Kimura, 12227-901 São José Dos Campos - SP (BR)
(74) Representative: Liesegang, Eva

(56) References cited:
- WO-A1-2009/048364
- US-A- 2 787 746
- US-A- 5 473 235
- US-A1- 2006 044 269
- US-A1- 2008 128 253
- US-H- H1 822

## Description

### CROSS-REFERENCE

### FIELD

The embodiments disclosed herein relate generally to sidestick controller grips which are usefully provided as an operator interface for a variety of apparatus so as to allow an operator to effect various manual control inputs.

### BACKGROUND

Sidestick controllers (more simply known in the art as "sidesticks" or "joysticks") have been widely used in various industries for control of heavy machinery, construction vehicles, bulldozers, submarines, simulators and of course aircraft. The introduction of sidesticks within the aerospace industry has occurred primarily for military applications, such as to provide pilot control inputs for jet fighters, helicopters, aircraft simulators and remote-controlled (drone) aircraft. Furthermore, both commercial and general aviation industries have realized the advantages of replacing conventional centrally mounted control yokes with sidesticks to provide enhanced visibility of instruments in an aircraft instrument panel as well as increased physical space for the pilots. The use of sidesticks in aviation industries other than military aviation was thus only feasible when the fly-by-wire technology of military aircraft became available for non-military aircraft.

One of the most challenging aspects that engineers and designers face when developing sidesticks for non-military aircraft resides with providing the proper ergonomic characteristics for such sidesticks since their locations in relation to the pilots and the force magnitudes are significantly different when compared to the well-known aircraft control yokes. More specifically, as its name implies, a sidestick is located physically at the lateral console of the aircraft and is intended to be commanded by only one arm of the pilot while a control yoke is located physically in front of the pilot and may be commanded readily by both arms. Consequently, the break-out force and master gradient in sidesticks are significantly lower as compared to conventional control yokes.

Equally important for achieving a harmonic application of sidesticks in terms of ergonomics and handling quality are the comfort and accessibility of important system functions actuators, such as auto-pilot quick disconnect function, priority of control (i.e. take priority of control for the on-side sidestick while the cross-side sidestick is inactive), PTT (push-to-talk) communication functions, and the like. The sidestick controller grips as disclosed herein are therefore directed to providing superior ergonomics and handling quality in terms of operator comfort and accessibility for various system functions.

International publication WO 2009/048364 A1 discloses a control lever machine operation, said lever including an ergonomic grip configured to receive an operator's hand so that the hand wraps the grip, said grip including a front face with a number of front buttons for manipulating by the thumb of an operator, and a rear face with a number of buttons for subsequent manipulation by the other fingers of an operator. One of the front buttons comprises a displaceable control which is movable in the longitudinal direction of the thumb and which is configured to control the movement of a machine. The control handle is twisted along its longitudinal direction so as to provide better adaptation to an operator's hand.

US publication US 2006/044269 A1 discloses a control comprising a grip connected to a pivot base mode, said base comprising sensing elements that detect movement of the grip so as to pivot on the base. Moreover, a microsensor is disposed within the base. Said microsensor checks an output signal which is transmitted to a remote control.

US 2,787,746 A discloses an auxiliary control grip for operating a lever mechanism and means of operation. Said control comprises a housing mounted on the lever mechanism manually operated, a potentiometer to operate the acting means independently of the operation of the lever mechanism and a button operated by the thumb to control the potentiometer by means of rotational movements.

US 5,473,235 describes an active hand controller comprising a current cell which generates a signal representative of the force or torque applied both to control by the user's hand. Said current cell has an internal center of rotation and distributed masses; these masses are used to counteract the effect of inertial force in control.

US H 1822 H relates to a double manual control comprising a first control with a projection and a switch and a second control which is significantly smaller than the first control. The second control is mounted to the projection of the first control; wherein the first control is movable along a first axis and a second axis which are perpendicular to each other.

US 2008/128253 A1 discloses a manual control comprising a body which is integrated to a control element manually operable, said body comprising a housing with a spherical domed central section for ergonomically supporting the inner surface of the hand, said central section forming an upper apex of the body, and in which at least one control element is arranged at a distance from the surface apex of the body, when the inner surface of the hand is being supported. Said control can be operated by a finger.

### SUMMARY

According to the invention, a sidestick controller grip according to claim 1 is provided. According to one aspect, sidestick controller grips will comprise a base, an elongate column grip extending upwardly from the base, a head at an upper end portion of the grip column, and a thumb rest surface extending laterally and upwardly relative to the column grip. The thumb rest surface may be supported by a concave outwardly extending support wall which joins the thumbrest surface at a generally serpentine edge. In this regard, the generally serpentine edge may extend generally outwardly convexly from a lower region thereof at the column grip to a convex apex region, and then extends from the apex region generally upwardly and concavely to an upper region thereof at the head. The thumbrest surface may be concave to facilitate comfort.

The head of the sidestick controller grip includes a split face surface defining inboard and outboard face surfaces disposed laterally adjacent to one another. According to the invention, the inboard face surface is disposed at an elevation that is lower than the outboard face surface. Inboard and outboard pushbuttons thus project outwardly from the inboard and outboard face surfaces, respectively. More specifically, some embodiments will include an inboard face surface which is disposed at an elevation that is lower than the outboard face surface so that the inboard pushbutton is positioned in an inboard recessed well defined by the inboard face surface and an L-shaped pair of top and side walls. The inboard and outboard face surfaces may be joined to one another at an aft end thereof, and forwardly diverge relative to one another such that the inboard face surface is at a lower elevation as compared to the outboard face surface.

A forward pushbutton and/or a lateral pushbutton may extend outwardly from the head and laterally from the thumbrest support wall to provide ready pilot control of other aircraft system functions

Some embodiments of the sidestick controller grip will comprise an elastomeric material covering at lest a portion of the column grip. The base may also include a concavely flared palm support surface that can be elongated in an aft direction.

The sidestick controller grip will comprise a base, an elongate column grip extending upwardly from the base, and a head at an upper end portion of the grip column, wherein the head includes a split face surface defining inboard and outboard face surfaces disposed laterally adjacent to one another. The inboard face surface is at an elevation which is lower than the outboard face surface. Inboard and outboard pushbuttons are thus provided which project outwardly from the inboard and outboard face surfaces, respectively.

Aircraft or other apparatus requiring manual user control inputs (e.g., heavy machinery, system simulators and the like) may thus be provided with one (or more) sidestick controller grips. When provided in an aircraft, a mirror image pair of sidestick controller grips will likely be present, one being a left-handed grip for the pilot and one being a right-handed grip for the co-pilot.

These and other aspects and advantages will become more clear after careful consideration is given to the following detailed description of the preferred exemplary embodiments thereof.

### BRIEF DESCRIPTION OF ACCOMPANYING DRAWINGS

The disclosed embodiments will be better and more completely understood by referring to the following detailed description of exemplary non-limiting illustrative embodiments in conjunction with the drawings of which:
FIGURE 1 is a pilot's eye view of an aircraft cockpit in which pilot (left-handed) and co-pilot (right-handed) sidestick controller grips according to one embodiment are provided;
FIGURE 2 is a right-side perspective view of the pilot (left-handed) sidestick controller grip depicted in FIGURE 1;
FIGURES 3 and 4 are front and rear elevational views, respectively, of the sidestick controller grip depicted in FIGURE 2;
FIGURE 5 is a top plan view of the sidestick controller grip depicted in FIGURE 2;
FIGURES 6 and 7 are right and left side elevational views, respectively, of the sidestick controller grip depicted in FIGURE 2; and
FIGURES 8 and 9 are front and rear elevational views of a sidestick controller according to another embodiment.

### DETAILED DESCRIPTION

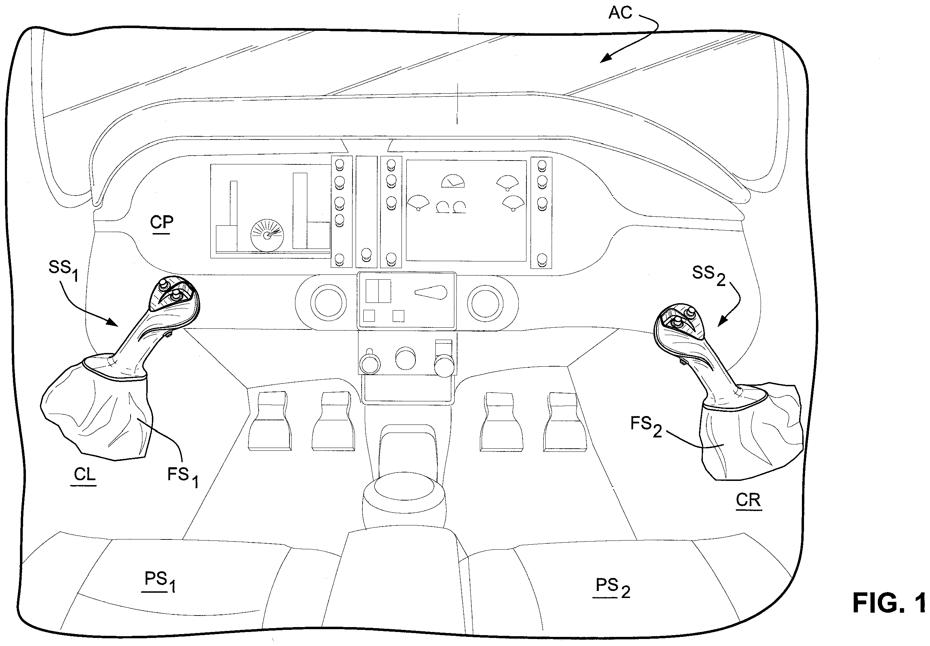

Accompanying FIGURE 1 depicts a pilots-eye view of an exemplary aircraft cockpit AC environment in which the aircraft controls and instrumentation are located. As can be seen, pilot (left-handed) and copilot (right-handed) sidestick controller grips SS1 and SS2 (hereinafter sometimes more simply referred to as "sidesticks") are positioned on the lateral left and right consoles CL, CR of the cockpit AC adjacent the pilot and copilot seats PS1, PS2, respectively. A flexible shroud FS1, FS2 may be provided with each of the sidesticks SS1, SS2 so as to visibly hide the mechanical and electrical connections thereof. As can be seen, the control panel CP is unobstructed by the sidesticks SS1 and SS2 due to their positioning laterally of the seats PS1, PS2 on the consoles CL, CR, respectively, thereby providing the pilots with greater visibility of the aircraft instrumentation.

It will be understood that, while reference will be made to an aircraft sidestick controller, various other uses and apparatus may similarly be provided with a control stick as described herein. Thus, reverence to an aircraft sidestick controller is to be understood to be a reference to a presently preferred embodiment that is non-limiting to its possible end uses.

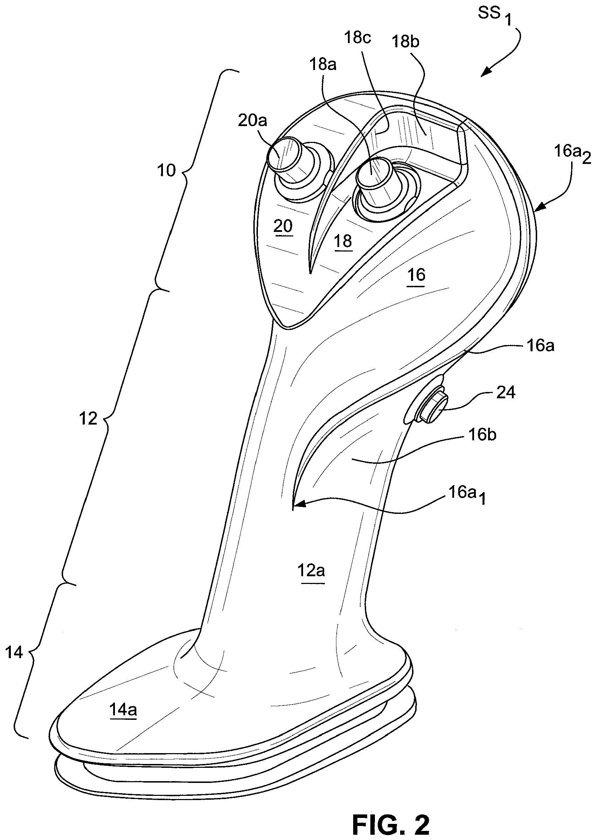

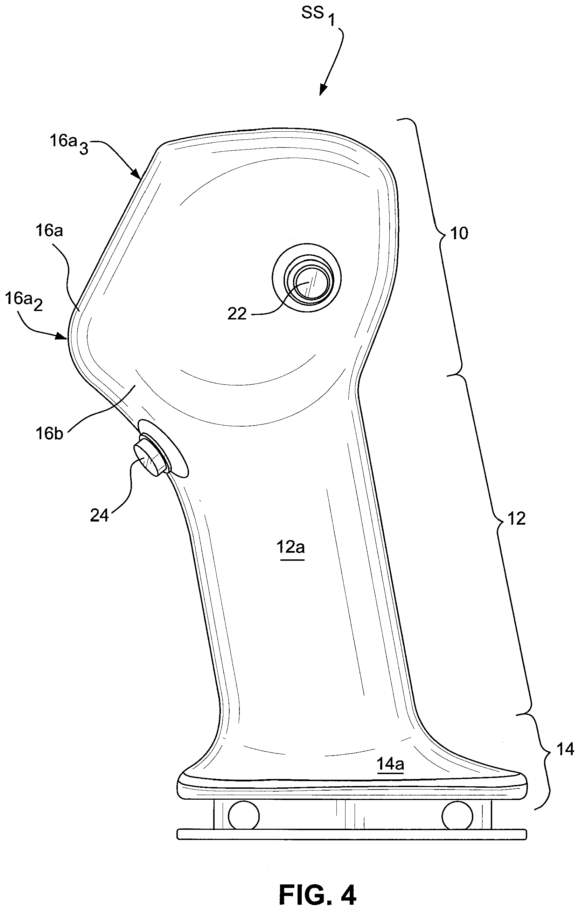

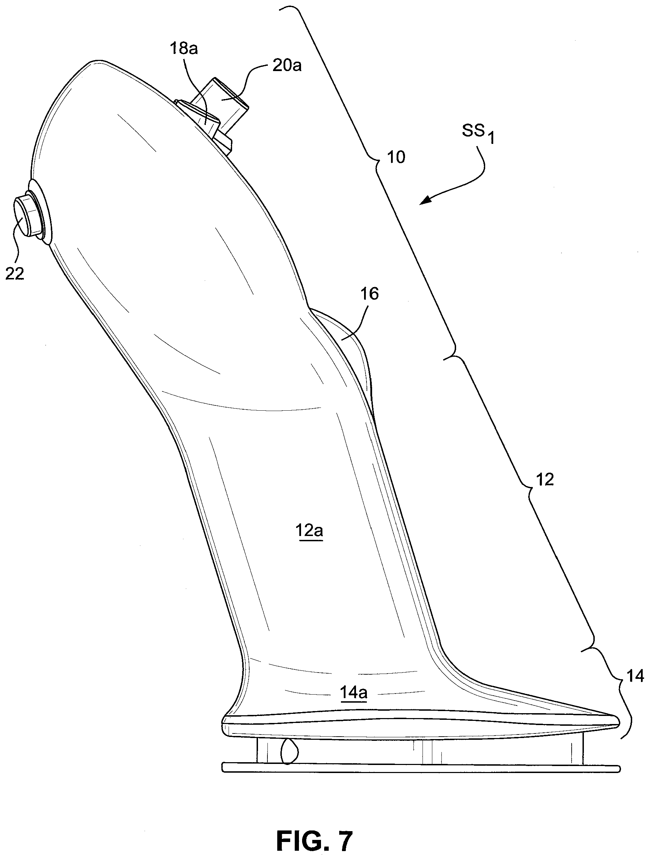

Accompanying FIGURES 2-7 depict in greater detail the pilot (left-handed) sidestick SS1, it being understood that the co-pilot (right-handed) sidestick SS2 is substantially a mirror image thereof. Thus, the discussion below with respect to the pilot sidestick SS1 is equally germane and pertinent to the co-pilot sidestick SS2 but will not be discussed in greater detail in the interest of clarity.

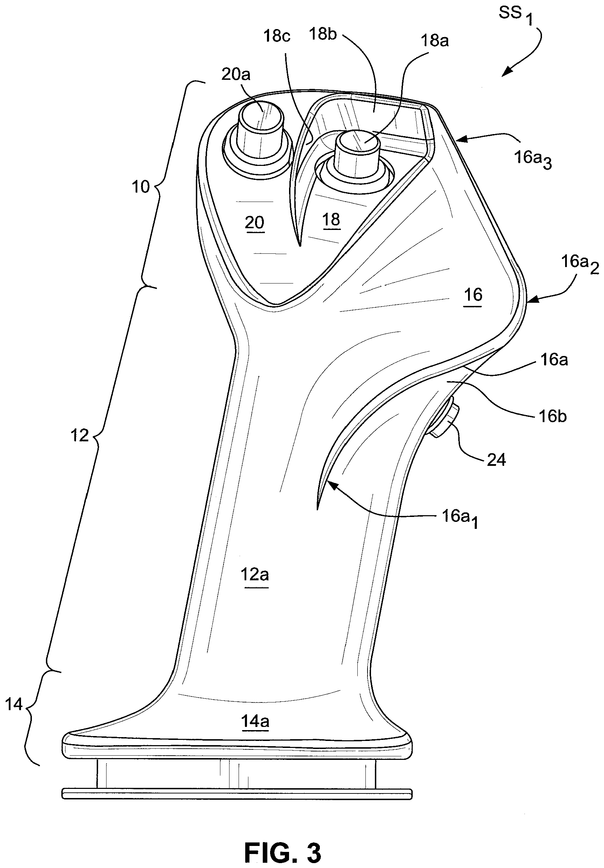

The sidestick SS1 is generally comprised of an upper head 10, a column grip 12 and a lower base 14 that are configured so that a pilot's left hand may comfortably fit thereon when the sidestick is gripped during use (see FIGURE 2). A thumbrest surface 16 extends generally laterally outwardly and upwardly relative to the column grip 12. As shown, for example in FIGURE 3, the thumbrest surface 16 is supported by a concave outwardly extending support wall 16b which joins the thumbrest surface at a lateral generally serpentine edge 16a. The edge 16a extends generally outwardly convexly from a lower region 16a₁ thereof at the column grip 12 to a convex apex region 16a₂ and then generally upwardly and concavely to an upper region 16a₃ thereof at the head 10. The thumbrest surface 16 is itself slightly concave so as to promote comfort.

The head 10 defines a split face surface defining slightly convex or substantially planar inboard and outboard (relative to the pilot) face surfaces 18, 20 disposed laterally adjacent to one another. The inboard and outboard surfaces 18, 20 are thus joined to one another at an aft end (relative to the control panel CP) thereof and then forwardly diverge from one another so the former is at an elevation that is lower relative to the latter. The inboard and outward surfaces 18, 20 include push buttons 18a, 20a protruding outwardly therefrom. The push button 18a may for example serve to provide quick disconnect of the auto-pilot and/or to establish priority of the sidesticks SS1 and SS2 (e.g., to establish which one of the sidesticks SS1 or SS2 is capable of providing active control inputs to the aircraft attitude control surfaces), while the push button 20a may be employed as a tactile control steering (TCS) pushbutton (e.g., to allow a pilot to override the autopilot momentarily without disengaging the autopilot to permit the input of manual pitch (vertical speed) changes). Thus, in order to allow a pilot more tactile sensation to identify the correct one of the push buttons 18a, 20a (and thereby minimize confusion as to which of the push buttons is being actuated), the inboard push button 18a is at a slightly lower elevation as compared to the outboard push button 20a due to the differential angular orientation of the respective face surfaces 18, 20.

In this regard, a plane tangent to each of the face surfaces 18, 20 is inclined generally upwardly and forwardly (relative to the control panel CP) at different angles. The angle of inclination of the inboard face surface 18 relative to a horizontal plane is less than that of the outboard face surface. Moreover, the angular difference relative to a horizontal plane between the inboard and outboard face surfaces 18, 20 is such that the planar top surfaces of the push buttons 18a, 20a extending outwardly from the face surfaces 18, 20, respectively, form an angle of therebetween of about 10° to about 15°, more preferably about 13° (± about 0.25°).

In use, a pilot will grasp the sidestick SS1 so that the pilot's palm is placed physically against the column grip 12 with the thumb positioned on and supported by the thumbrest surface 16. The pilot will then be capable of manipulating the thumb and fingers so as to access various system push buttons presented by the sidestick SS1. It will be observed in this regard that the inboard push button 18a is located essentially in an inboard recessed well defined by the face surface 18 and the L-shaped top and side walls 18b, 18c joining the lower inboard face wall 18 to the upper outboard face wall 20. As is seen, the side wall 18c tapers from its junction with the top wall 18b in an aft direction to the juncture of the inboard and outboard face surfaces 18, 20 so as to be generally triangularly shaped (although having a slight convexly arcuate configuration). The recessed well defined by the walls 18b, 18c is thus open on its inboard (pilot) side to allow the pilot's thumb to be moved easily from the thumbrest surface 16 for access and activation of the push button 18a. Similarly, the pilot's thumb may be suitably positioned to allow for access and activation of the push button 20a protruding from the outboard face surface 20, in which case the lower elevation of the inboard face surface 18 relative to the outboard face surface 20 provides the pilot with tactile feed-back of thumb positioning.

The sidestick SS1 also includes additional push buttons 22, 24. By way of example, the push button 22 may be provided as a push-to-talk (PTT) communication switch to allow radio communication when depressed, while the push button 24 may be provided as an enhanced vision switch (EVS) to allow the pilot to select enhanced vision (e.g., either synthetic vision or infrared vision) displayed on the instrumentation of the cockpit control panel CP. The push button 22 protrudes outwardly and forwarding (relative to the control panel CP) so as to be manipulated by the pilots index (second) finger. The push button 24 protrudes outwardly and laterally downwardly from the thumbrest support wall 16b so as to be manipulated by the pilot's middle (third) finger.

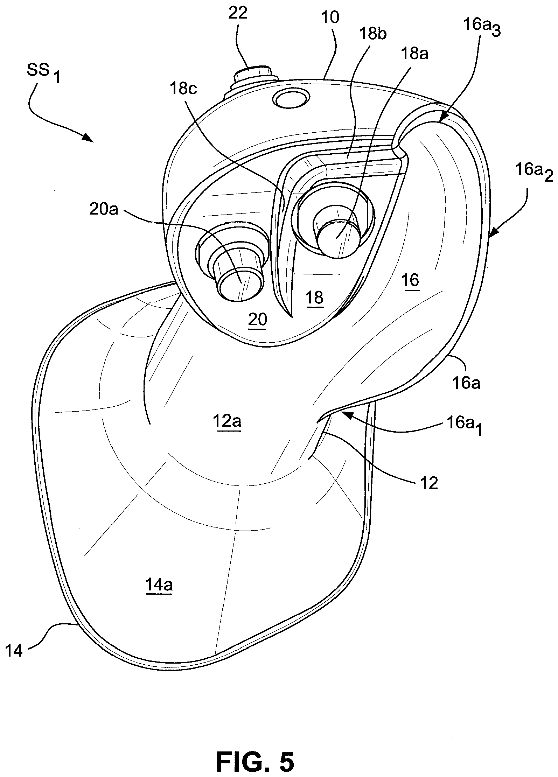

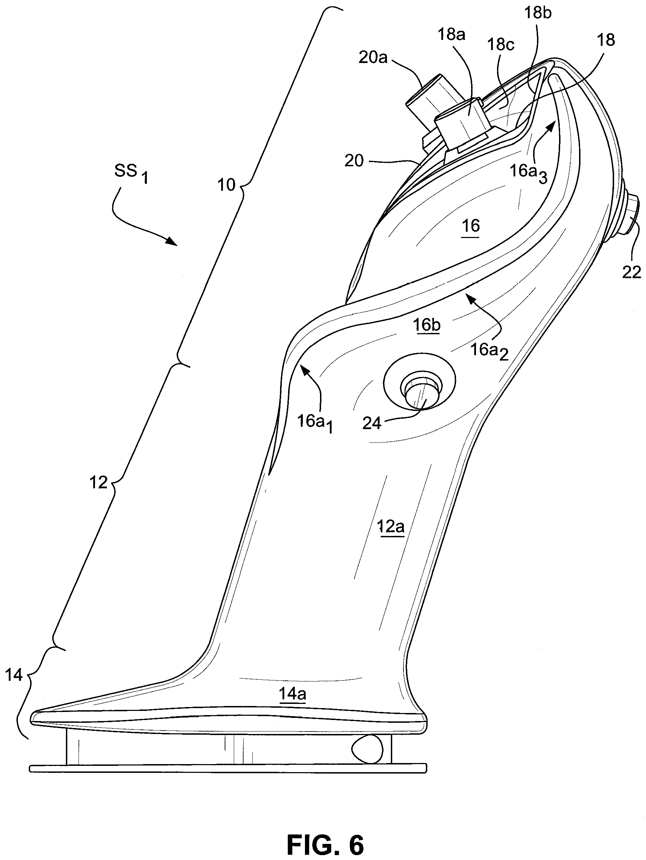

A lower concavely flared palm support surface 14a is provided at the lower base 14 so as to provide a palm rest for the pilot's hand. As shown, for example in FIGURES 5 and 6, the palm support surface 14a is elongated in the aft (relative to the control panel CP) direction so as to provide enhanced support for the pilot's palm when gripping the sidestick SS1.

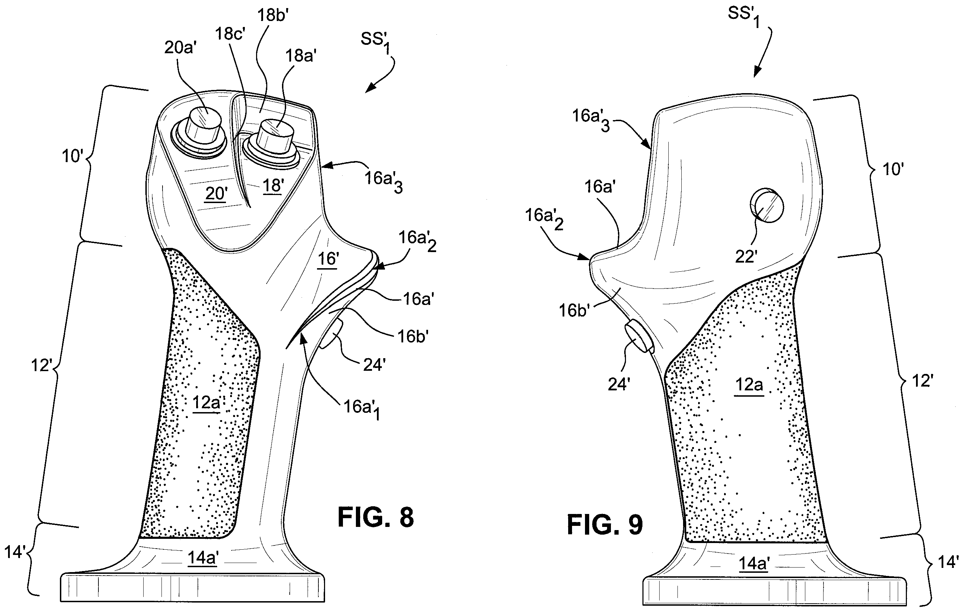

The external surface of the sidestick can be provided with any suitable tactile-enhancing material. By way of example, as shown by the embodiment depicted in FIGS. 8 and 9 (which include the same reference numerals as in FIGS. 2-7 but delineated by a prime (') notation to illustrate similar structures therebetween), the column grip 12' of the sidestick SS1' may be provided with regions 12a in contact with a pilot's palm that are formed of a rubber-like elastomeric material to thereby provide enhanced gripping sensation. Alternatively, a metallized surface may be provided with or without surface roughness as may be desired.

## Claims

1. A sidestick controller grip comprising a base (14), an elongate column grip (12) extending upwardly from the base (14), a head (10) at an upper end portion of the grip column (12), and a thumb rest surface (16) extending laterally and upwardly relative to the column grip (12); wherein the head (10) includes a split face surface defining an inboard face surface (18) and an outboard face surface (20) disposed laterally adjacent to one another; wherein the inboard face surface is at an elevation which is lower than the outboard face surface; and an inboard pushbutton (18a) and an outboard pushbutton (20a) projecting outwardly from the inboard face surface (18) and outboard face surface (20), respectively, **characterised in that** a plane tangent to each of the face surfaces is inclined upwardly and forwardly at different angles, the angle of inclination of the inboard face surface relative to a horizontal plane being less than that of the outboard face surface; wherein the angular difference relative to the horizontal plane between the inboard and outboard face surfaces is such that planar top surfaces of said inboard pushbutton (18a) and said outboard pushbutton (20a), respectively, form an angle therebetween of 10° to 15°.

2. The sidestick controller grip as in claim 1, wherein the thumb rest surface (16) is supported by a concave outwardly extending support wall (16b).

3. The sidestick controller grip as in claim 2, wherein the support wall (16b) joins the thumb rest surface (16) at a generally serpentine edge (16a).

4. The sidestick controller grip as in claim 3, wherein the generally serpentine edge (16a) extends generally outwardly convexly from a lower region (16a₁) thereof at the column grip (12) to a convex apex region (16a₂), and then extends from the apex region (16a₂) generally upwardly and concavely to an upper region (16a₃) thereof at the head (10).

5. The sidestick controller grip as in claim 1, wherein the thumb rest surface (16) is concave.

6. The sidestick controller grip as in claim 1, wherein the inboard face surface (18) is disposed at an elevation that is lower than the outboard face surface (20) so that the inboard pushbutton (18a) is positioned in an inboard recessed well defined by the inboard face surface (18) and an L-shaped pair of top and side walls (18b, 18c).

7. The sidestick controller grip as in claim 1, wherein the inboard face surface (18) and the outboard face surface (20) are joined to one another at an aft end thereof, and forwardly diverge relative to one another such that the inboard face surface (18) is at a lower elevation as compared to the outboard face surface (20).

8. The sidestick controller grip as in claim 1, further comprising a forward pushbutton (22) extending outwardly from the head (10).

9. The sidestick controller grip as in claim 2, further comprising a lateral pushbutton (24) extending laterally from the thumb rest support wall (16b).

10. The sidestick controller grip as in claim 1, further comprising an elastomeric material covering at least a portion of the column grip (12).

11. The sidestick controller grip as in claim 1, wherein the base (14) includes a concavely flared palm support surface (14a).

12. The sidestick controller grip as in claim 1, wherein the palm support surface (14a) is elongated in an aft direction.

13. The sidestick controller grip as in claim 1, wherein said planar top surfaces of said inboard pushbutton (18a) and said outboard pushbutton (20a) form an angle therebetween of 13° ± 0.25°.

14. An aircraft which comprises a sidestick controller grip as in any of the preceding claims.

## Patentansprüche

1. Seitenknüppel-Steuergriff mit einer Basis (14), einer langgestreckten Griffsäule (12), die sich von der Basis (14) aus aufwärts erstreckt, einem Kopf (10) an einem oberen Endabschnitt der Griffsäule (12) und einer Daumenablageoberfläche (16), welche sich bezüglich der Griffsäule (12) seitwärts und aufwärts erstreckt;
wobei der Kopf (10) eine getrennte Oberfläche umfasst, welche eine innenseitige Oberfläche (18) und eine außenseitige Oberfläche (20) umfasst, die einander seitwärts benachbart sind;
wobei die innenseitige Oberfläche tiefer liegt als die außenseitige Oberfläche; und
einem innenseitigen Druckknopf (18a) und einem außenseitigen Druckknopf (20a), welche aus der innenseitigen Oberfläche (18) bzw. der außenseitigen Oberfläche (20) nach außen vorstehen;
**dadurch gekennzeichnet, dass** eine Ebene, welche tangential zu den entsprechenden Oberflächen liegt, in unterschiedlichen Winkeln nach oben und nach vorne geneigt ist, wobei der Neigungswinkel der innenseitigen Oberfläche bezüglich einer horizontalen Ebene geringer ist als der Neigungswinkel der außenseitigen Oberfläche;
wobei der Winkelunterschied bezüglich der horizontalen Ebene zwischen der innenseitigen Oberfläche und der außenseitigen Oberfläche derart ist, dass planare obere Oberflächen des innenseitigen Druckknopfs (18a) und des außenseitigen Druckknopfs (20a) einen Winkel zwischen 10° bis 15° einschließen.

2. Seitenknüppel-Steuergriff nach Anspruch 1, bei welchem die Daumablageoberfläche (16) von einer konkaven, sich auswärts erstreckenden Trägerwand (16b) getragen wird.

3. Seitenknüppel-Steuergriff nach Anspruch 2, bei welchem die Trägerwand (16b) sich mit der Daumenablageoberfläche (16) in einer im Wesentlichen gewundenen Kante (16a) trifft.

4. Seitenknüppel-Steuergriff nach Anspruch 3, bei welchem die im Wesentlichen gewundene Kante (16a) sich im Wesentlichen konvex auswärts von einem unteren Bereich (16a₁) an der Griffsäule (12) zu einem konvexen Scheitelbereich (16a₂) erstreckt und sich dann von dem Scheitelbereich (16a₂) im Wesentlichen aufwärts und konkav zu einem oberen Bereich (16a₃) an dem Kopf (10) erstreckt.

5. Seitenknüppel-Steuergriff nach Anspruch 1, bei welchem die Daumenablageoberfläche (16) konkav ist.

6. Seitenknüppel-Steuergriff nach Anspruch 1, bei welchem die innenseitige Oberfläche (18) tiefer als die außenseitige Oberfläche (20) liegt, so dass der innenseitige Druckkopf (18a) in einer innenseitigen Vertiefung, welche von der innenseitigen Oberfläche (18) und einem L-förmigen Paar von Ober- und Seitenwänden (18b, 18c) definiert ist, angeordnet ist.

7. Seitenknüppel-Steuergriff nach Anspruch 1, bei welchem die innenseitige Oberfläche (18) und die außenseitige Oberfläche (20) an ihren rückseitigen Enden miteinander verbunden sind und in Vorwärtsrichtung gegeneinander divergieren, so dass die innenseitige Oberfläche (18) tiefer liegt als die außenseitige Oberfläche (20).

8. Seitenknüppel-Steuergriff nach Anspruch 1, ferner umfassend einen vorderseitigen Druckknopf (22), welcher sich von dem Kopf (10) aus auswärts erstreckt.

9. Seitenknüppel-Steuergriff nach Anspruch 2, ferner umfassend einen seitlichen Druckknopf (24), welcher sich seitwärts von der Trägerwand (16b) für die Daumablage erstreckt.

10. Seitenknüppel-Steuergriff nach Anspruch 1, ferner umfassend ein elastomeres Material, welches wenigstens einen Teil der Griffsäule (12) bedeckt.

11. Seitenknüppel-Steuergriff nach Anspruch 1, bei welchem die Basis (14) eine konkav aufgeweitete Handflächenträgeroberfläche (14a) umfasst.

12. Seitenknüppel-Steuergriff nach Anspruch 1, bei welchem die Handflächenträgeroberfläche (14a) in einer rückseitigen Richtung langgestreckt ist.

13. Seitenknüppel-Steuergriff nach Anspruch 1, bei welchem die planaren oberen Oberflächen des innenseitigen Druckknopfs (18a) und des außenseitigen Druckknopfs (20a) einen Winkel von 13° ± 0,25° miteinander ausbilden.

14. Luftfahrzeug mit einem Seitenknüppel-Steuergriff nach einem der vorangehenden Ansprüche.

## Revendications

1. Poignée de commande de manche latéral comprenant une base (14), une poignée colonnaire allongée (12) s'étendant vers le haut à partir de la base (14), une tête (10) au niveau d'une partie d'extrémité supérieure de la colonne de poignée (12) et une surface de support pour le pouce (16) s'étendant latéralement et vers le haut par rapport à la poignée colonnaire (12) ;
dans laquelle la tête (10) comprend une surface de face fendue définissant une surface de face intérieure (18) et une surface de face extérieure (20) disposées de manière latérale entre elles ; dans laquelle la surface de face intérieure est à une hauteur qui est inférieure à la surface de face extérieure ;
et un bouton-poussoir intérieur (18a) et un bouton-poussoir extérieur (20a) faisant saillie vers l'extérieur à partir de la surface de face intérieure (18) et la surface de face extérieure (20), respectivement, **caractérisée en ce qu'**un plan tangent par rapport à chacune des surfaces de face est incliné vers le haut et vers l'avant à différents angles, l'angle d'inclinaison de la surface de face intérieure par rapport à un plan horizontal étant inférieur à celui de la surface de face extérieure ; dans laquelle la différence angulaire par rapport au plan horizontal entre les surfaces de face intérieure et extérieure est telle que les surfaces supérieures planaires dudit bouton-poussoir intérieur (18a) et dudit bouton-poussoir extérieur (20a) respectivement, forment un angle compris entre 10° et 15°.

2. Poignée de commande de manche latéral selon la revendication 1, dans laquelle la surface de support pour le pouce (16) est supportée par une paroi de support concave (16b) s'étendant vers l'extérieur.

3. Poignée de commande de manche latéral selon la revendication 2, dans laquelle la paroi de support (16b) assemble la surface de support pour le pouce (16) au niveau d'un bord (16a) généralement en serpentin.

4. Poignée de commande de manche latéral selon la revendication 3, dans laquelle le bord (16a) généralement en serpentin, s'étendant généralement de manière convexe vers l'extérieur à partir de sa région inférieure (16a₁) au niveau de la poignée colonnaire (12) jusqu'à une région de sommet convexe (16a₂) et s'étend ensuite à partir de la région de sommet (16a₂) généralement vers le haut et de manière concave jusqu'à sa région supérieure (16a₃) au niveau de la tête (10).

5. Poignée de commande de manche latéral selon la revendication 1, dans laquelle la surface de support pour le pouce (16) est concave.

6. Poignée de commande de manche latéral selon la revendication 1, dans laquelle la surface de face intérieure (18) est disposée à une hauteur qui est inférieure à la surface de face extérieure (20) de sorte que le bouton-poussoir intérieur (18a) est positionné dans un puits enfoncé intérieur défini par la surface de face intérieure (18) et une paire de parois supérieure et latérale (18b, 18c) en forme de L.

7. Poignée de commande de manche latéral selon la revendication 1, dans laquelle la surface de face intérieure (18) et la surface de face extérieure (20) sont assemblées entre elles au niveau d'une extrémité arrière, et divergent vers l'avant l'une par rapport à l'autre de sorte que la surface de face intérieure (18) est à une hauteur moindre par rapport à la surface de face extérieure (20).

8. Poignée de commande de manche latéral selon la revendication 1, comprenant en outre un bouton-poussoir avant (22) s'étendant vers l'extérieur à partir de la tête (10).

9. Poignée de commande de manche latéral selon la revendication 2, comprenant en outre un bouton-poussoir latéral (24) s'étendant latéralement à partir de la paroi de support pour le pouce (16b).

10. Poignée de commande de manche latéral selon la revendication 1, comprenant en outre un matériau élastomère recouvrant au moins une partie de la poignée colonnaire (12).

11. Poignée de commande de manche latéral selon la revendication 1, dans laquelle la base (14) comprend une surface de support de paume (14a) évasée de manière concave.

12. Poignée de commande de manche latéral selon la revendication 1, dans laquelle la surface de support de paume (14a) est allongée dans une direction arrière.

13. Poignée de commande de manche latéral selon la revendication 1, dans laquelle lesdites surfaces supérieures planaires dudit bouton-poussoir intérieur (18a) et dudit bouton-poussoir extérieur (20a) forment un angle entre elles de 13° ± 0,25°.

14. Aéronef qui comprend une poignée de commande de manche latéral selon l'une quelconque des revendications précédentes.
